(19) **Europäisches Patentamt** / **European Patent Office** / **Office européen des brevets**

(11) **EP 4 546 671 A1**

(12) **EUROPEAN PATENT APPLICATION**
published in accordance with Art. 153(4) EPC

(43) Date of publication:
**30.04.2025  Bulletin 2025/18**

(21) Application number: **23845038.1**

(22) Date of filing: **26.05.2023**

(51) International Patent Classification (IPC):
**H04B 17/318** (2015.01)    **H04W 64/00** (2009.01)

(52) Cooperative Patent Classification (CPC):
**H04B 17/318; H04W 16/20; H04W 64/00;**
**Y02D 30/70**

(86) International application number:
**PCT/CN2023/096573**

(87) International publication number:
**WO 2024/021824 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.07.2022  CN 202210875975**

(71) Applicant: **ZTE Corporation**
**Shenzhen, Guangdong  518057 (CN)**

(72) Inventor: **GAO, Jing**
**Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **WIRELESS NETWORK WI-FI SENSING METHOD AND SYSTEM, AND COMPUTER DEVICE**

(57)    The present application relates to the field of communications. Provided are a wireless network Wi-Fi sensing method and system, and a computer device. The wireless network Wi-Fi sensing method comprises: acquiring a Wi-Fi signal which is transmitted in a path (S100); detecting a scenario state of a Wi-Fi signal coverage area in real time (S200); and performing signal processing on the Wi-Fi signal according to the scenario state, so as to generate a spectrogram (S300).

```
┌──────────────────────────────────────────────┐
│ Acquire a Wi-Fi signal transmitted in a path  │──S100
└──────────────────────────────────────────────┘
                      │
                      ▼
┌──────────────────────────────────────────────┐
│ Detect a scenario state of a coverage area of  │──S200
│ the Wi-Fi signal in real time                  │
└──────────────────────────────────────────────┘
                      │
                      ▼
┌──────────────────────────────────────────────┐
│ Perform signal processing on the Wi-Fi signal  │──S300
│ according to the scenario state, and generate  │
│ a spectrum                                     │
└──────────────────────────────────────────────┘
```

FIG. 2

## Description

### CROSS-REFERENCE TO RELATED APPLICATIONS

The present application is based on and claims priority to Chinese Patent Application No. 202210875975.3, filed on July 25, 2022, the entire content of which is incorporated herein by reference.

### TECHNICAL FIELD

The present application relates to the field of communication technologies, in particular to a wireless network Wi-Fi sensing method and system, and a computer device.

### BACKGROUND

Monitoring and sensing based on a wireless network Wi-Fi is performed by means of a received signal strength indicator (RSSI). In a real scenario, when a wireless network Wi-Fi signal is transmitted in an indoor environment, the Wi-Fi signal will be affected by a plurality of obstacles, and reach a receiver along a plurality of paths including refraction and transmission paths, where signals on different paths will have different degrees of distortion phenomena such as attenuation and time delay, and the signals received by a receiving end are the superposition result of distorted signals on different paths, that is, the so-called multipath effect. Affected by the multipath effect, the stability of the RSSI received indoors is low, and the RSSI will fluctuate greatly even in the indoor static scenario. Therefore, the indoor multipath effect greatly limits the sensing ability of the RSSI, so the RSSI can only be used to realize some sensing tasks as coarse-grained indoor positioning.

### SUMMARY

The present application provides a wireless network Wi-Fi sensing method and system, and a computer device.

According to a first aspect, the present application provides a wireless network Wi-Fi sensing method. The method includes: acquiring a Wi-Fi signal transmitted in a path; detecting a scenario state of a coverage area of the Wi-Fi signal in real time; and performing signal processing on the Wi-Fi signal according to the scenario state, and generating a spectrogram.

According to a second aspect, the present application provides a wireless network Wi-Fi sensing system. The system includes: a signal acquiring module, configured to acquire a Wi-Fi signal transmitted in a path; a detecting module, configured to detect a scenario state of a coverage area of the Wi-Fi signal in real time; and a signal processing module, configured to perform signal processing on the Wi-Fi signal according to the scenario state, and generating a spectrogram.

According to a third aspect, the present application provides a computer device, including a memory and a processor. The memory stores computer-readable instructions, and the computer-readable instructions, when executed by one or more processors, cause the one or more processors to perform steps of the method according to any one described in the first aspect.

According to a fourth aspect, the present application further provides a computer-readable storage medium. The computer-readable storage medium is able to be read and written by a processor and stores computer instructions, and computer-readable instructions, when executed by one or more processors, cause the one or more processors to perform steps of the method according to any one described in the first aspect.

### BRIEF DESCRIPTION OF DRAWINGS

FIG. 1 is a schematic structural diagram of a wireless network Wi-Fi sensing system according to an embodiment of the present application.

FIG. 2 is a schematic flowchart of a wireless network Wi-Fi sensing method according to an embodiment of the present application.

FIG. 3 is a schematic flowchart of sub-steps of step S300 in FIG. 2.

FIG. 4 is a schematic flowchart of sub-steps of step S310 in FIG. 3.

FIG. 5 is a schematic flowchart of sub-steps of step S311 in FIG. 4.

FIG. 6 is a schematic flowchart of sub-steps of step S313 in FIG. 4.

FIG. 7 is a schematic flowchart of sub-steps of step S320 in FIG. 3.

FIG. 8 is an overall schematic flowchart of a wireless network Wi-Fi sensing method according to another embodiment of the present application.

FIG. 9 is a schematic structural diagram of a computer device according to an embodiment the present application.

DETAILED DESCRIPTION

In order to make the objectives, technical solutions and advantages of the present application more clear, the present application is further described in detail below with reference to the accompanying drawings and embodiments. It should be understood that the specific embodiments described herein are merely illustrative of the present application and are not intended to limit the present application.

It should be noted that although a logical sequence is illustrated in the flowchart, in some instances, the steps shown or described may be performed in an order different from that shown herein. The terms "first", "second", and the like in the description, the claims and the above-mentioned drawings are used for distinguishing between similar objects and not necessarily for describing a particular sequential or chronological order.

The embodiments of the present application provide a wireless network Wi-Fi sensing method and system, and a computer device. According to the embodiments of the present application, a Wi-Fi signal transmitted in a path is acquired first, which is conducive to subsequent processing of the Wi-Fi signal transmitted in the path; by detecting a scenario state of the coverage area of the Wi-Fi signal in real time, dynamic changes in the area at different moments can be obtained; and signal processing is performed on the Wi-Fi signal according to the scenario state, and a spectrogram is generated. Multi-dimensional and high-precision Wi-Fi sensing is realized, the spectrogram can reflect a mapping relationship between spatial changes and signal changes, and the Wi-Fi signal can be identified according to the spectrogram, so the method can be used to realize coarse-grained and fine-grained sensing tasks. In other words, according to the solution of the embodiments of the present application, Wi-Fi signals of a plurality of paths are processed through the scenario state detected in real time, the spectrogram is obtained, so that multi-dimensional and high-precision Wi-Fi sensing is realized, so the solution can be used to realize the coarse-grained and fine-grained sensing tasks. Compared with the related art, the problem of Wi-Fi sensing decline caused by a multipath effect can be alleviated, and multi-dimensional and high-precision Wi-Fi sensing is realized, which can be used to realize not only coarse-grained sensing tasks, but also fine-grained sensing tasks.

The embodiments of the present application are further illustrated below in conjunction with the accompanying drawings.

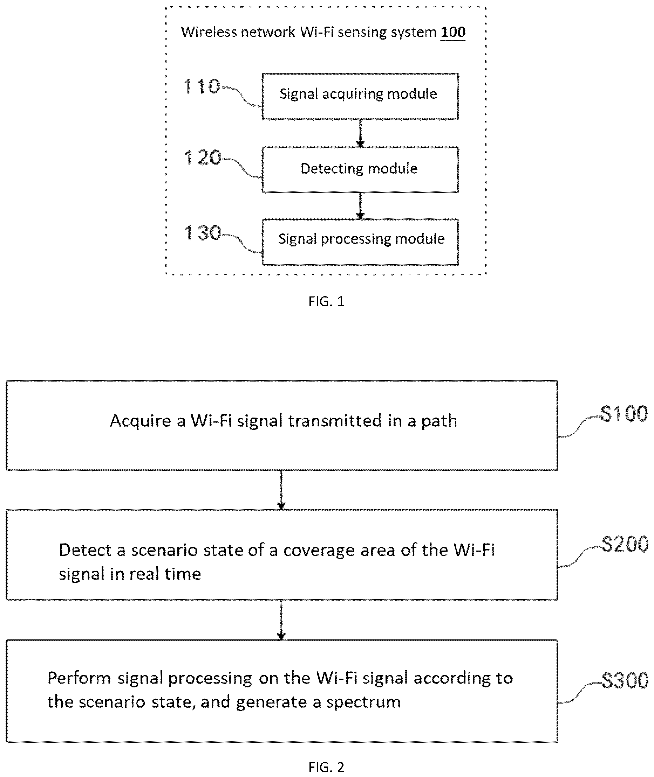

Referring to FIG. 1, FIG. 1 is a schematic structural diagram of a wireless network Wi-Fi sensing system according to an embodiment of the present application. In an example of FIG. 1, a wireless network Wi-Fi sensing system includes: a Wi-Fi signal transmitted in a path is acquired first by a signal acquiring module, which is conducive to subsequent processing of the Wi-Fi signal transmitted in the path; a scenario state of the coverage area of the Wi-Fi signal is detected in real time by a detecting module, and dynamic changes in the area at different moments can be obtained; and signal processing is performed on the Wi-Fi signal by a signal processing module according to the scenario state, a spectrogram is generated. Therefore, the Wi-Fi signal can be identified according to the spectrogram, the problem of Wi-Fi sensing decline caused by a multipath effect can be alleviated, and multi-dimensional and high-precision Wi-Fi sensing is realized, which can be used to realize not only coarse-grained sensing tasks, but also fine-grained sensing tasks.

In an embodiment, the signal acquiring module is connected to the detecting module, and the detecting module is connected to the signal processing module. The signal acquiring module may use a Wi-Fi chip to collect signals, and can suffice by supporting baseband signal acquisition, which will not be illustrated here. The wireless network Wi-Fi sensing system can be applied to the Wi-Fi chip of a transceiver to support all projects that may acquire channel state information (CSI) or passive Wi-Fi radar (PWR) information.

In an embodiment, the Wi-Fi signal may be Wi-Fi signals transmitted in a plurality of paths or a single path transmitted in a single path. For the transmitted Wi-Fi signals, the wireless network Wi-Fi sensing system is applicable to processing wireless signals transmitted using orthogonal frequency division multiplexing and wireless signals transmitted using time division multiplexing, and is also applicable to processing other wireless signals transmitted using a modulation and demodulation technology, which will not be illustrated here.

The device and application scenarios described in the embodiment of the present application are to more clearly illustrate the technical solutions of the embodiment of the present application, and do not constitute a limitation on the technical solution provided by the embodiment of the present application. It is known to those skilled in the art that with the emergence of new application scenarios, the technical solution provided by the embodiment of the present application is also suitable for similar technical problems.

It is understood by those skilled in the art that the wireless network Wi-Fi sensing system shown in FIG. 1 is not to be construed as limiting the embodiment of the present application and may include more or fewer modules than illustrated, or combine some components, or be a different arrangement of components.

According to the above wireless network Wi-Fi sensing system, various embodiments of a wireless network Wi-Fi sensing method of the present application are illustrated below.

As shown in FIG. 2, FIG. 2 is a schematic flowchart of a wireless network Wi-Fi sensing method according to an embodiment of the present application. The wireless network Wi-Fi sensing method is applied to the wireless network Wi-Fi sensing system. The wireless network Wi-Fi sensing method includes, but is not limited to, step S100, step S200 and step S300.

At step S100, a Wi-Fi signal transmitted in a path is acquired.

In an embodiment, the Wi-Fi signal may be Wi-Fi signals transmitted in a plurality of paths or Wi-Fi signals transmitted in a single path. In a case where a plurality of antennas are available, the plurality of antennas transmit the Wi-Fi signals in the plurality of paths, and according to a frequency division multiplexing or time division multiplexing technology, the Wi-Fi signals can be transmitted in the paths without interfering with each other, thereby improving the utilization rate of a channel. Wi-Fi signals transmitted in the path collected by a front end of hardware or Wi-Fi radar signals transmitted in the path collected by a front end of a radio frequency device are used as the Wi-Fi signals, so that the Wi-Fi signals transmitted in the path are acquired, which is conducive to subsequent signal processing according to the acquired Wi-Fi signals transmitted in the path.

At step S200, a scenario state of the coverage area of the Wi-Fi signal is detected in real time.

In an embodiment, in an actual transmission environment of the signals, the wireless signals will be affected by a plurality of obstacles and will reach a receiver along a plurality of paths including refraction and transmission paths, where the signals on different paths will have different degrees of attenuation and time delay and other distortions. Therefore, the Wi-Fi signals have distance and precision restrictions. Through real-time detection of the scenario state of the coverage area of the Wi-Fi signal, dynamic changes, that is, the scenario state, in the area at different moments can be obtained, which is conducive to subsequent signal processing according to the scenario state so as to alleviate the distance and precision restrictions.

At step S300, signal processing is performed on the Wi-Fi signal according to the scenario state, and a spectrogram is generated.

In an embodiment, the scenario state may be an activity recognition, gesture recognition, or fall detection scenario, and may be the change of the relative distance and speed between an object and the antennas. Signal processing is performed on the Wi-Fi signal according to the above different scenario states, the spectrogram is generated, so that multi-dimensional and high-precision Wi-Fi sensing is realized, the spectrogram can reflect a mapping relationship between spatial changes and signal changes, and the Wi-Fi signal can be identified according to the spectrogram, so the method can be used to realize coarse-grained and fine-grained sensing tasks.

In an embodiment, the CSI is an extension of Wi-Fi communication, the CSI is used to estimate a communication channel between transmitting and receiving and provides amplitude and phase information at the same time, and the difference between the angle and amplitude of a phase may be improved with appropriate wireless hardware. The PWR information is based on a principle of radar, the PWR information correlates a transmitted signal from an access point with a transmitted signal from a monitored area, and Wi-Fi radar positioning is relatively rough. Therefore, the CSI has better performance in a line-of-sight configuration and can process a large amount of data offline. The PWR information has better performance in a spatial configuration of the Wi-Fi access point and a radar receiver, and has real-time performance. By combining the CSI and the PWR information, the appropriate one of the CSI and the PWR information is selected for signal processing according to different detection scenarios, which can improve the real-time performance and accuracy of Wi-Fi sensing.

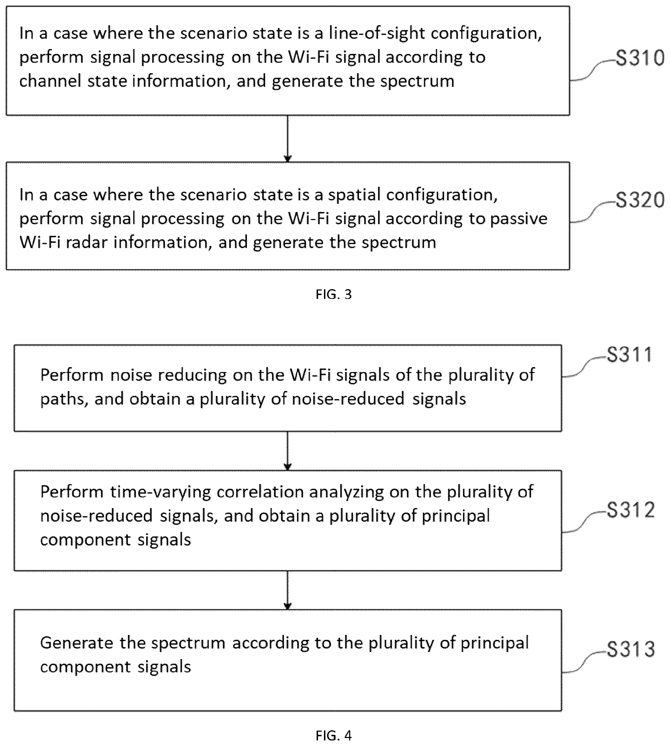

In an embodiment, the Wi-Fi signal is Wi-Fi signals of a plurality of paths. As shown in FIG. 3, performing signal processing on the Wi-Fi signal according to the scenario state, and generating the spectrogram includes, but is not limited to, step S310 or step S320.

At step S310, in a case where the scenario state is a line-of-sight configuration, signal processing is performed on the Wi-Fi signal according to channel state information, and the spectrogram is generated.

In an embodiment, the line-of-sight configuration includes human activity recognition, gesture recognition, or fall detection, etc. appearing in the scenario, and due to the physical isolation between transmitting and receiving, there are restrictions on a sensing range and sensing precision. Therefore, signal processing is performed on the Wi-Fi signal using the channel state information, which can realize a wider detection range and higher detection precision, and can also process a large amount of data.

In an embodiment, the channel state information can calculate channel information of each subcarrier in frequency division multiplexing, and may also calculate channel information of each subcarrier in time division multiplexing. The following takes orthogonal frequency division multiplexing as an example to illustrate the processing process of performing signal processing on the Wi-Fi signal using the channel state information so as to generate the spectrogram.

As shown in FIG. 4, in the case where the scenario state is the line-of-sight configuration, signal processing is performed on the Wi-Fi signal according to the channel state information, and the spectrogram is generated includes, but is not limited to, the following steps S311 to S313.

At step S311, noise reducing is performed on the Wi-Fi signals of the plurality of the paths, and a plurality of noise-reduced signals is obtained.

In an embodiment, data signals collected by the front end of the hardware usually carry noise. First, peaks on all 56 orthogonal frequency division multiplexing subcarriers are uniformly sampled, and then noise reducing is performed on the sampled Wi-Fi signals in each path, and the plurality of noise-reduced signals are obtained, which can provide basic signals with high signal-noise ratio for detection.

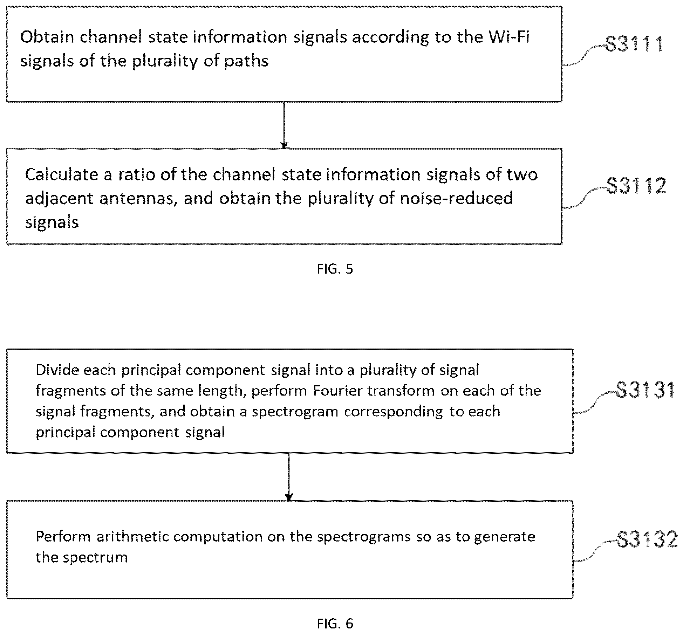

In an embodiment, in a case of a plurality of antennas, as shown in FIG. 5, performing noise reducing on the Wi-Fi signals of all the paths, and obtaining the plurality of noise-reduced signals includes, but is not limited to, the following steps S3111 to S3112.

At step S3111, channel state information signals are obtained according to the Wi-Fi signals of the plurality of paths.

In an embodiment, orthogonal frequency division multiplexing (OFDM) is widely used in a variety of Wi-Fi standards, and a bandwidth in an OFDM system is shared between a plurality of overlapping orthogonal subcarriers. An OFDM signal is defined according to the following formula:

$$x(t) = \frac{1}{\sqrt{N}} \sum_{n=1}^{N} a_n e^{j\frac{2\pi}{T_s}nt}$$

where, x(t) is the OFDM signal, N is the number of subcarriers, $a_n$ is the nth symbol in a matrix symbol sequence, $T_S$ is the symbol period of OFDM, $t$ is the time, and $j$ is the coefficient.

In an embodiment, the matrix symbol sequence may be quadrature phase shift keying (QPSK) or quadrature amplitude modulation (QAM). $j$ is the coefficient that may be adjusted according to actual situations.

In an embodiment, a received signal includes reflection signals and direct signals of a plurality of paths, the reflection signals include delay and phase shift signals from a moving person and a stationary object, and the received signal is defined according to the following formula:

$$y(t) = \sum_{p} A_p e^{j2\pi f_d t} x(t - \tau) + n(t)$$

where, y(t) is the received signal, $A_p$ is a decay factor of a $p$th path, $\tau$ is the time delay, and $f_d$ is the Doppler shift. $n(t)$ is additive white Gaussian noise, and j is an adjustable coefficient.

In an embodiment, the received signal includes Wi-Fi signals of the plurality of paths, and the channel state information signals, i.e. CSI signals, are obtained according to superposition of the Wi-Fi signals of the plurality of paths, which is conducive to subsequent noise reducing of the signals.

At step S3112, a ratio of the channel state information signals of two adjacent antennas is calculated, and the plurality of noise-reduced signals are obtained.

In an embodiment, the channel state signals obtained according to step S3111 is highly noisy due to power and data rate changes of a Wi-Fi wireless access point. According to the division law of two complex numbers, the CSI signal ratio is still a complex value, the resulting amplitude is the quotient of the amplitude of the CSI signals, and the phase is the difference between the phases of two adjacent CSI signals. In terms of the amplitude, pulse noise is scaling noise, which amplifies the power of each antenna at the same level on the same receiver, that is, although the power scaling changes with time, it is consistent between different antennas on the same receiver, and the noise may be eliminated by calculating an amplitude coefficient of two antennas. In terms of the phase, since different antennas on the receiver share the same clock, the phase offset (such as carrier) is frequency offset the same as sampling frequency offset, the phase frequency offset is random and time-varying, but they are the same two antennas, and the noise can be effectively offset by calculating a phase difference between two antennas. Therefore, by calculating the ratio of the channel state information signals of two adjacent antennas, the plurality of noise-reduced signals can be obtained, which can eliminate most of the noise in CSI signal amplitude and time-varying phase offset, and provide the high signal-noise ratio basic signals for detection. Moreover, the plurality of CSI signals are obtained according to a multi input multi output (MIMO) technology, which can achieve a longer detection range and higher detection precision.

In an embodiment, the CSI signal at the carrier frequency $f_c$ is represented as $H(f_c, t)$, and calculating the ratio of the channel state information of two adjacent antennas of the same receiver to obtain the noise-reduced signals is represented by the following formula:

$$(f, \mathrm{t}) = \mathrm{H}_1(f_c, \mathrm{t}) / \mathrm{H}_2(f_c, \mathrm{t})$$

where, $(f, \mathrm{t})$ represents the noise-reduced signal, $\mathrm{H}_1(f_c, \mathrm{t})$ represents the CSI signal of one antenna, and $\mathrm{H}_2(f_c, \mathrm{t})$ represents the CSI signal of another antenna.

The above formula is expanded and expressed as:

$$(f, \mathrm{t}) = \frac{\delta(t) e^{-j\emptyset(t)} \left( H_{s,1} + A_1 e^{-j2\pi \frac{d_1(t)}{\lambda}} \right)}{\delta(t) e^{-j\emptyset(t)} \left( H_{s,2} + A_2 e^{-j2\pi \frac{d_2(t)}{\lambda}} \right)}$$

where, $(f, \mathrm{t})$ represents the noise-reduced signal, $H_{s,1}$ represents the CSI signal of a first antenna, $H_{s,2}$ represents the CSI signal of a second antenna, $\delta(t)$ represents the amplitude pulse noise, $\emptyset(t)$ represents the time-varying phase offset, $d_1(t)$ represents the target reflection path length of the first antenna, $d_2(t)$ represents the target reflection path length of the second antenna, $A_1$ represents the attenuation factor of the first antenna, $A_2$ represents the attenuation factor of the second antenna, and $j$ and $\lambda$ are both adjustable coefficients.

After optimizing the above formula, the following formula is obtained:

$$(f, \mathrm{t}) = \frac{\left( H_{s,1} + A_1 e^{-j2\pi \frac{d_1(t)}{\lambda}} \right)}{\left( H_{s,2} + A_2 e^{-j2\pi \frac{d_2(t)}{\lambda}} \right)}$$

where, $(f, \mathrm{t})$ represents the noise-reduced signal, $d_1(t)$ represents the target reflection path length of the first antenna, $d_2(t)$ represents the target reflection path length of the second antenna, $A_1$ represents the attenuation factor of the first antenna, $A_2$ represents the attenuation factor of the second antenna, and $j$ and $\lambda$ are both adjustable coefficients.

At step S312, time-varying correlation analyzing is performed on the plurality of noise-reduced signals, and a plurality of principal component signals are obtained.

In an embodiment, due to the large amount of data of the Wi-Fi signals collected by a front end of a hardware device, the amount of data of the obtained channel state information signals is also large. Exemplarily, the same transceiver consists of one transmitting antenna and three receiving antennas, with a success rate of 1kHz, $1\times3\times1\mathrm{k}=3\mathrm{k}$ complex CSI signals per second. More transceivers may also be included, and each transceiver may have more antennas, so that the amount of data of the obtained noise-reduced signals is large, and dimensionality reduction is required to reduce the overall computational complexity. A principal components analysis (PCA) algorithm is used to identify the time-varying correlations between CSI signal streams of all the noise-reduced signals, and then components representing the measurement changes of the CSI signals are extracted by combining these time-varying correlations. Other dimensionality reduction algorithms may also be used to extract the main components from a large amount of data, which will not be illustrated here. The number of principal components selected is balanced between classification performance and computational complexity. Exemplarily, 70% of the variance of the signal or 60% is captured from two or three principal components, six main parts of the CSI signal are extracted according to the variance ratio, and if the first main part includes noise generated by reflection from the stationary object, the first main part is discarded, and only five main parts are used. The above algorithm can obtain the principal component signals of the CSI signals from a large amount of data, which can not only ensure the classification performance, but also reduce the computational complexity, which is conducive to the subsequent processing according to the principal component signals.

At step S313, the spectrogram is generated according to the plurality of principal component signals.

As shown in FIG. 6, generating the spectrogram according to the plurality of principal component signals includes, but is not limited to, the following steps S3131 and S3132.

At step S3131, each principal component signal is divided into a plurality of signal fragments of the same length, and Fourier transform is performed on each of the signal fragments, and a spectrogram corresponding to each principal component signal is obtained.

In an embodiment, the CSI signal is highly sensitive to the surrounding environment. Since radio frequency reflection of the human body exhibits different frequencies when different activities are performed, a calibration process of scanning the background is usually required. In the embodiment of the present application, short-term Fourier transform (STFT) is used to perform spectrogram transform on each principal component signal. In an embodiment, the STFT uses a sliding window to divide the principal component signal into the plurality of signal fragments of the same length, and then performs fast Fourier transform (FFT) on samples in each fragment so as to obtain the spectrogram corresponding to each principal component signal. A wavelet transform algorithm may also be used for spectrogram transform, as long as spectrogram transform can be performed, which will not be illustrated here. Each spectrogram includes three dimensions of the FFT, namely time, frequency and amplitude. Obtaining the spectrograms is conducive to subsequent calculation according to the spectrograms to obtain the spectrum.

The STFT algorithm is represented by the following formula:

$$X(t, k) = \sum_{n=-\infty}^{\infty} x[n]w[n-t]e^{-jkn}$$

where, X(t, k) represents the Fourier transform result, k represents the frequency index, $x[n]$ represents the time domain input signal, $w[n - t]$ represents the window function, and $j$ represents the adjustable coefficient.

At step S3132, arithmetic computation is performed on each spectrogram, and the spectrum is generated.

Exemplarily, five main parts are obtained according to step S312, the spectrogram is generated from the five main parts, and then the five main parts corresponding to the spectrogram are averaged, and the spectrum is generated. The spectrum can reflect a mapping relationship between spatial changes and signal changes, so that the Wi-Fi signal can be sensed and identified. The arithmetic computation may also be maximizing or minimizing computation, as long as it can improve the sensing precision.

At step S320, in a case where the scenario state is a spatial configuration, signal processing is performed on the Wi-Fi signal according to passive Wi-Fi radar information, and the spectrum is generated.

In an embodiment, the channel state information may calculate channel information of each subcarrier in frequency division multiplexing, and may also calculate channel information of each subcarrier in time division multiplexing. Orthogonal frequency division multiplexing is taken as an example in the following to illustrate the processing process of performing signal processing on the Wi-Fi signal using the passive Wi-Fi radar information so as to generate the spectrum.

In an embodiment, the PWR information usually captures signals with a much longer duration than the CSI to ensure that a sufficient number of Wi-Fi signals can be captured, so that the PWR information uses the entire Wi-Fi signal. That is, the PWR information does not process the signal of each subcarrier, but treats the entire OFDM as one signal, and the PWR information cannot access information within each subcarrier. The spatial configuration includes a distance between the transceiver and an object in the area, or the rough calculation of the action of the object, so that the PWR information is used for real-time signal processing of the entire Wi-Fi signal, without focusing on the information within each subcarrier, and the spectrum is generated. The spectrum can reflect a mapping relationship between spatial changes and overall signal changes, which is conducive to sensing and identification of the Wi-Fi signal.

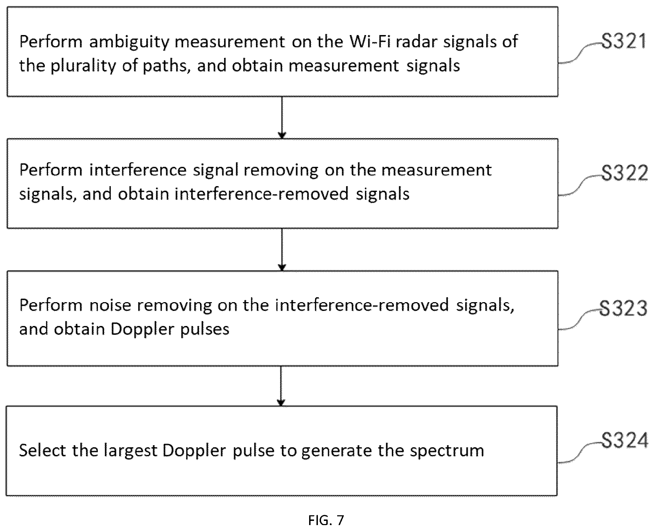

In an embodiment, the Wi-Fi signal is Wi-Fi signals of a plurality of paths, as shown in FIG. 7, in the case where the scenario state is the spatial configuration, performing signal processing on the Wi-Fi signal according to the passive Wi-Fi radar information, and generating the spectrum includes, but is not limited to, the following steps S321 to S324.

At step S321, ambiguity measurement is performed on the Wi-Fi radar signals of the plurality of paths, and measurement signals are obtained.

In an embodiment, a cross-ambiguity function (CAF) is used to perform ambiguity measurement on the Wi-Fi signals of the paths, and the measurement signals are obtained, and the signals collected by radar can be effectively extracted, which is conducive to subsequent rapid processing of the measurement signals. The cross-ambiguity function may be a low-complexity cross-ambiguity function, or other versions of cross-ambiguity functions, as long as the distance and Doppler information can be effectively extracted, which will not be illustrated here. The CAF is an effective tool for extracting target range and Doppler information in the field of passive radar, and requires two channels, i.e., a monitoring channel collects the signals from a monitoring area, and a reference channel measures the signals directly from a transmitter.

At step S322, interference signal removing is performed on the measurement signals, and interference-removed signals are obtained.

In an embodiment, a main interference source of the PWR information is the signals from other Wi-Fi hotspots directly entering the monitoring channel, i.e. direct interference information, and the direct interference information has a higher energy than the signals reflected from a moving target and may shield the Doppler pulse on the CAF surface. Direct interference signal removing is performed on the measurement signals by using an improved CLEAN algorithm, and the interference-removed signals are obtained, which can improve the signal-noise ratio of target signals. The improved CLEAN algorithm may be either a CLEAN-PSF algorithm or a CLEAN-SC algorithm. The improved CLEAN algorithm shares a similar structure to the CAF process and generates a self-ambiguity surface only from the reference channel, which is represented by the following formula:

$$CAF^k\left(\hat{\tau}, \widehat{f_d}\right) = CAF^k(\tau, f_d) - \alpha^k CAF_{self}(\tau - T_k, f_d)$$

where, $CAF^k\left(\hat{\tau}, \widehat{f_d}\right)$ represents the interference-removed signal, $CAF_{self}$ represents the self-ambiguity surface, $CAF^k(\tau, f_d)$ represents $k$ measurement signals, $\alpha^k$ represents the maximum amplitude of the $k$th CAF surface, $T_k$ represents the maximum phase shift of the kth CAF surface, and $\tau$ represents the time delay.

At step S323, noise removing is performed on the interference-removed signals, and Doppler pulses are obtained.

In an embodiment, there is residual noise after the CLEAN algorithm due to the correlation within a time interval, and the noise on the CAF surface is further reduced by removing interference signals through step S322. The background noise distribution of the interference-removed signals is estimated by a constant false-alarm rate (CFAR), and is applied to the CAF surface so as to obtain the Doppler pulses. The Doppler pulses are obtained, which is conducive to subsequent generation of the spectrum according to the Doppler pulses.

The CFAR is applied to the CAF surface to be represented by the following formula:

$$\Lambda = \frac{1}{N_\tau N_{f_d}} \sum_{i=1}^{R_\tau} \sum_{j=1}^{R_{f_d}} CAF(\tau_i, f_{d_j})$$

where, $\Lambda$ represents the threshold of the CAF surface, $i$ represents the distance index, $j$ represents the Doppler index, $N_\tau$ represents the processing time of the Doppler index, $N_{f_d}$ represents the distance, $R_\tau$ represents the upper limit of the processing time, $R_{f_d}$ represents the upper limit of the distance, and $CAF(\tau_i, f_{d_j})$ represents each interference-removed signal.

In an embodiment, a strong pulse higher than the threshold represents human activity, otherwise it is inferred that no motion has occurred, and therefore the human activity can be measured.

At step S324, the largest Doppler pulse is selected to generate the spectrum.

In an embodiment, the plurality of Doppler pulses are obtained according to step S323, and the spectrum is generated by selecting the largest Doppler pulse from the Dopplers within the CAF surface and combining a series of measurement results. The spectrum is a Doppler spectrum of the PWR information. The Doppler spectrum can reflect a mapping relationship between spatial changes and overall signal changes, so that the Wi-Fi signal can be sensed and identified.

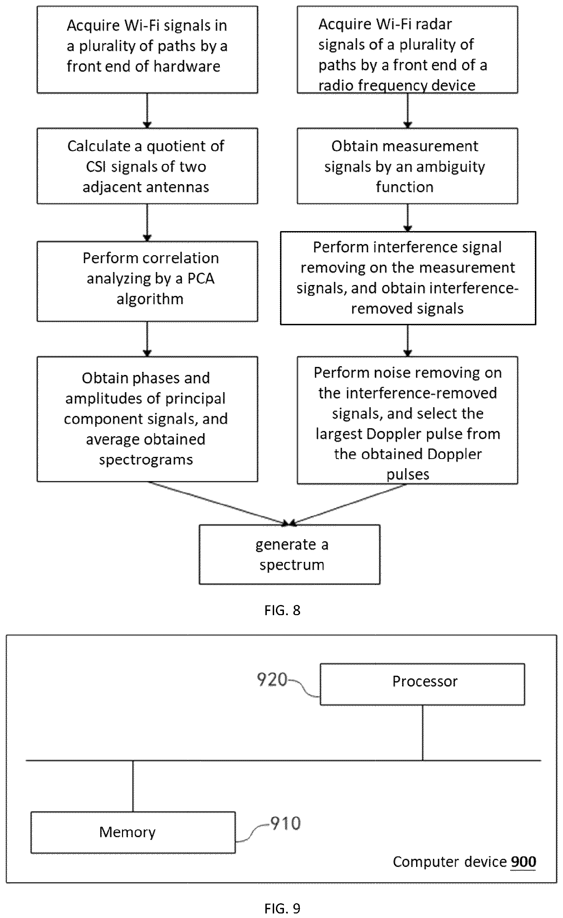

As shown in FIG. 8, the overall process is as follows: a Wi-Fi signal transmitted in a path, which may be Wi-Fi signals of a plurality of paths or a Wi-Fi signal of a single path, is acquired first. Taking the Wi-Fi signals of the plurality of paths as an example, the Wi-Fi signals may be Wi-Fi signals of the plurality of paths acquired by a front end of hardware or Wi-Fi radar signals of the plurality of paths acquired by a front end of a radio frequency device. According to the detected scenario state, in a case where the scenario state is a line-of-sight configuration, exemplarily, gesture recognition and fall recognition etc. are performed, the Wi-Fi signals of the plurality of paths acquired by the front end of the hardware are processed by using channel state information, a CSI signal of each antenna of the same transceiver is calculated first, then the quotient of the CSI signals of two adjacent antennas of the same receiver is calculated according to the obtained CSI signals so as to obtain noise-reduced signals, then correlation analyzing is performed on the noise-reduced signals by using a PCA algorithm, principal components are extracted, then a spectrum corresponding to each principal component is obtained according to the phase and amplitude of principal component signals, an average value of the spectrograms is calculated to generate a final spectrum, the changes of the Wi-Fi signals are observed, and the Wi-Fi signals are identified, thereby realizing the high-precision Wi-Fi sensing task. In a case where the scenario state is a spatial configuration, exemplarily, the distance between the transceiver and the object in the area is calculated, as well as the motion of the object is roughly calculated, the Wi-Fi radar signals of the plurality of paths acquired through the front end of the radio frequency device are processed through the passive Wi-Fi radar information, measurement signals are obtained through an ambiguity function first, interference signals on the surfaces of the measurement signals are eliminated to obtain interference-removed signals, and then noise removing is performed on the interference-removed signals to obtain a plurality of Doppler pulses, the spectrum is generated by selecting the largest Doppler pulse from the Doppler pulses, the changes in the Wi-Fi signals are observed, the Wi-Fi signals are identified, and the multi-dimensional Wi-Fi sensing task can be realized by combining the channel state information. In the above scenario state detected in real time, according to the scenario states at different times, one of the channel state information and the passive Wi-Fi radar information is selected accordingly to process the Wi-Fi signals, the spectrum is generated to reflect the change state of the signals, the signals are processed by cross-applying the channel state information and the passive Wi-Fi radar information in different scenarios, and the multi-dimensional and high-precision Wi-Fi sensing can be realized.

In an embodiment, the above wireless network Wi-Fi sensing method can be applied to fine-grained sensing tasks such as fall detection, gesture recognition, and action detection, and can also be applied to coarse-grained tasks such as distance detection, thereby having a wide range of applications.

Referring to FIG. 9, FIG. 9 shows a computer device 900 provided by an embodiment of the present application. The computer device 900 may be a server or a terminal, and an internal structure of the computer device 900 includes, but is not limited to:

> a memory 910, configured to store a program; and
> a processor 920, configured to execute the program stored in the memory 910, where when the processor 920 executes the program stored in the memory 910, the processor 920 is configured to implement the above wireless network Wi-Fi sensing method.

The processor 920 and the memory 910 may be connected via a bus or other means.

The memory 910 serves as a non-transitory computer-readable storage medium that may be configured to store non-transitory software programs and non-transitory computer-executable programs, such as the wireless network Wi-Fi sensing method according to any embodiments of the present application. The processor 920 runs the non-transitory software programs or instructions stored on the memory 910, so as to implement the above wireless network Wi-Fi sensing method.

The memory 910 may include a program storage area and a data storage area. The program storage area may store applications required for an operating system and at least one function. The data storage area may store data required for executing the above wireless network Wi-Fi sensing method. In addition, the memory 910 may include a high-speed random access memory, and may also include a non-transitory memory, such as at least one disk memory device, a flash memory device, or other non-transitory solid state memory devices. In some implementations, the memory 910 may include memories that are remotely set up relative to the processor 920, and these remote memories may be connected to the processor 920 via networks. Examples of the above networks include, but are not limited to, the Internet, corporate Intranets, local area networks, mobile communication networks, and combinations thereof.

Non-transitory software programs and instructions required to implement the above wireless network Wi-Fi sensing method are stored in the memory 910, and when executed by one or more processors 920, execute the above wireless network Wi-Fi sensing method provided by any embodiment of the present application.

An embodiment of the present application further provides a computer-readable storage medium storing computer-executable instructions. The computer-executable instructions may be used to execute the above wireless network Wi-Fi sensing method.

In an embodiment, the storage medium stores the computer-executable instructions, and the computer-executable instructions are executed by one or more control processors 920, for example, by one processor 920 of the above computer device 900, to cause the one or more processors 920 to execute the above wireless network Wi-Fi sensing method provided by any embodiment of the present application.

The embodiment of the present application includes: a Wi-Fi signal transmitted in a path is acquired first, which is conducive to the subsequent processing of the Wi-Fi signal transmitted in the path; by detecting a scenario state of the coverage area of the Wi-Fi signal in real time, dynamic changes in the area at different times can be obtained; and signal processing is performed on the Wi-Fi signal according to the scenario state, and a spectrum is generated. Multi-dimensional and high-precision Wi-Fi sensing is realized, the spectrum can reflect a mapping relationship between spatial changes and signal changes, and the Wi-Fi signal can be identified according to the spectrum, so the method can be used to realize coarse-grained and fine-grained sensing tasks. In other words, according to the solution of the embodiments of the present application, Wi-Fi signals of a plurality of paths are processed through the scenario state detected in real time, and the spectrum is obtained, so that multi-dimensional and high-precision Wi-Fi sensing is realized, so the solution can be used to realize the coarse-grained and fine-grained sensing tasks. Compared with the related art, the problem of Wi-Fi sensing decline caused by a multipath effect can be alleviated, and multi-dimensional and high-precision Wi-Fi sensing is realized, which can be used to realize not only coarse-grained sensing tasks, but also fine-grained sensing tasks.

The embodiments described above are merely illustrative. The units described as separate components may or may not be physically separated, that is, they may be located in one place, or distributed to a plurality of network units. Some or all of the modules may be selected according to actual needs to realize the purpose of the solutions of the embodiments.

It is understood by those of ordinary skill in the art that all or some of the steps and systems in the methods disclosed herein may be implemented as software, firmware, hardware, and appropriate combinations thereof. Some or all physical components may be implemented as software executed by a processor, such as a central processor, a digital signal processor, or a microprocessor, or as hardware, or as integrated circuits, such as application-specific integrated circuits. Such software may be distributed on a computer-readable medium, which may include a computer storage medium (or non-transient medium) and a communication medium (or transient medium). As is well known to those of ordinary skill in the art, the term of the computer storage medium includes volatile and nonvolatile, removable and non-removable media implemented in any method or technology for storage of information (such as computer-readable instructions, data structures, program modules or other data). The computer storage medium includes, but is not limited to, RAM, ROM, EEPROM, flash memory or other memory technology, CD-ROM, digital video disk (DVD) or other optical disk storage, magnetic cartridge, magnetic tape, disk storage or other magnetic storage device, or any other media that can be used to store desired information and can be accessed by a computer. In addition, it is well known to those of ordinary skill in the art that the communication medium usually includes computer-readable instructions, data structures, program modules, or other data in a modulated data signal such as other transmission mechanisms, and may include any information delivery medium.

## Claims

1. A wireless network Wi-Fi sensing method, comprising:

   acquiring a Wi-Fi signal transmitted in a path;
   detecting a scenario state of a coverage area of the Wi-Fi signal in real time; and
   performing signal processing on the Wi-Fi signal according to the scenario state, and generating a spectrum.

2. The method according to claim 1, wherein performing the signal processing on the Wi-Fi signal according to the scenario state, and generating the spectrum comprises:
   in a case where the scenario state is a line-of-sight configuration, performing the signal processing on the Wi-Fi signal according to channel state information, and generating the spectrum.

3. The method according to claim 2, wherein the Wi-Fi signal is Wi-Fi signals of a plurality of paths; and
   in the case where the scenario state is the line-of-sight configuration, performing the signal processing on the Wi-Fi signal according to the channel state information, and generating the spectrum comprises:

   performing noise reducing on the Wi-Fi signals of the plurality of paths, and obtaining a plurality of noise-reduced signals;
   performing time-varying correlation analyzing on the plurality of noise-reduced signals, and obtaining a plurality of principal component signals; and
   generating the spectrum according to the plurality of principal component signals.

4. The method according to claim 3, wherein in a case of a plurality of antennas, performing the noise reducing on the Wi-Fi signals of the plurality of paths, and obtaining the plurality of noise-reduced signals comprises:

   obtaining channel state information signals according to the Wi-Fi signals of the plurality of paths; and
   calculating a ratio of the channel state information signals of two adjacent antennas, and obtaining the plurality of noise-reduced signals.

5. The method according to claim 3, wherein generating the spectrum according to the plurality of principal component signals comprises:

   dividing each principal component signal into a plurality of signal fragments of the same length, performing Fourier transform on each of the signal fragments, and obtaining a spectrogram corresponding to each principal component signal; and
   performing arithmetic computation on the spectrograms, and generating the spectrum.

6. The method according to claim 1, wherein performing the signal processing on the Wi-Fi signal according to the scenario state, and generating the spectrum comprises:
   in a case where the scenario state is a spatial configuration, performing the signal processing on the Wi-Fi signal according to passive Wi-Fi radar information, and generating the spectrum.

7. The method according to claim 6, wherein the Wi-Fi signal is Wi-Fi radar signals of a plurality of paths; and in the case where the scenario state is the spatial configuration, performing the signal processing on the Wi-Fi signal according to the passive Wi-Fi radar information, and generating the spectrum comprises:

performing ambiguity measurement on the Wi-Fi radar signals of the plurality of paths, and obtaining measurement signals;
performing interference signal removing on the measurement signals, and obtaining interference-removed signals;
performing noise removing on the interference-removed signals, and obtaining Doppler pulses; and
selecting a largest Doppler pulse to generate the spectrum.

8. A wireless network Wi-Fi sensing system , comprising:

a signal acquiring module, configured to acquire a Wi-Fi signal transmitted in a path;
a detecting module, configured to detect a scenario state of a coverage area of the Wi-Fi signal in real time; and
a signal processing module, configured to perform signal processing on the Wi-Fi signal according to the scenario state, and generate a spectrum.

9. A computer device, comprising a memory and a processor, wherein the memory stores computer-readable instructions, and the computer-readable instructions, when executed by one or more processors, cause the one or more processors to perform steps of the method according to any one of claims 1 to 7.

10. A computer-readable storage medium, wherein the computer-readable storage medium is able to be read and written by a processor and stores computer-readable instructions, and the computer-readable instructions, when executed by one or more processors, cause the one or more processors to perform steps of the method according to any one of claims 1 to 7.

Wireless network Wi-Fi sensing system **100**

110 — Signal acquiring module

120 — Detecting module

130 — Signal processing module

FIG. 1

Acquire a Wi-Fi signal transmitted in a path — S100

Detect a scenario state of a coverage area of the Wi-Fi signal in real time — S200

Perform signal processing on the Wi-Fi signal according to the scenario state, and generate a spectrum — S300

FIG. 2

In a case where the scenario state is a line-of-sight configuration, perform signal processing on the Wi-Fi signal according to channel state information, and generate the spectrum ⟶ S310

In a case where the scenario state is a spatial configuration, perform signal processing on the Wi-Fi signal according to passive Wi-Fi radar information, and generate the spectrum ⟶ S320

FIG. 3

Perform noise reducing on the Wi-Fi signals of the plurality of paths, and obtain a plurality of noise-reduced signals ⟶ S311

Perform time-varying correlation analyzing on the plurality of noise-reduced signals, and obtain a plurality of principal component signals ⟶ S312

Generate the spectrum according to the plurality of principal component signals ⟶ S313

FIG. 4

Obtain channel state information signals according to the Wi-Fi signals of the plurality of paths ⟋S3111

Calculate a ratio of the channel state information signals of two adjacent antennas, and obtain the plurality of noise-reduced signals ⟋S3112

FIG. 5

Divide each principal component signal into a plurality of signal fragments of the same length, perform Fourier transform on each of the signal fragments, and obtain a spectrogram corresponding to each principal component signal ⟋S3131

Perform arithmetic computation on the spectrograms so as to generate the spectrum ⟋S3132

FIG. 6

Perform ambiguity measurement on the Wi-Fi radar signals of the plurality of paths, and obtain measurement signals — S321

Perform interference signal removing on the measurement signals, and obtain interference-removed signals — S322

Perform noise removing on the interference-removed signals, and obtain Doppler pulses — S323

Select the largest Doppler pulse to generate the spectrum — S324

FIG. 7

```
┌─────────────────────┐          ┌─────────────────────┐
│  Acquire Wi-Fi       │          │  Acquire Wi-Fi radar │
│  signals in          │          │  signals of a        │
│  a plurality of      │          │  plurality of        │
│  paths by a          │          │  paths by a front    │
│  front end of        │          │  end of a            │
│  hardware            │          │  radio frequency     │
│                      │          │  device              │
└─────────────────────┘          └─────────────────────┘
          │                                │
          ▼                                ▼
┌─────────────────────┐          ┌─────────────────────┐
│  Calculate a         │          │  Obtain measurement  │
│  quotient of         │          │  signals by an       │
│  CSI signals of two  │          │  ambiguity           │
│  adjacent antennas   │          │  function            │
└─────────────────────┘          └─────────────────────┘
          │                                │
          ▼                                ▼
┌─────────────────────┐          ┌─────────────────────┐
│  Perform correlation │          │  Perform interference│
│  analyzing by a PCA  │          │  signal              │
│  algorithm           │          │  removing on the     │
│                      │          │  measurement         │
│                      │          │  signals, and obtain │
│                      │          │  interference-       │
│                      │          │  removed signals     │
└─────────────────────┘          └─────────────────────┘
          │                                │
          ▼                                ▼
┌─────────────────────┐          ┌─────────────────────┐
│  Obtain phases and   │          │  Perform noise       │
│  amplitudes of       │          │  removing on         │
│  principal           │          │  the interference-   │
│  component signals,  │          │  removed             │
│  and average         │          │  signals, and select │
│  obtained            │          │  the                 │
│  spectrograms        │          │  largest Doppler     │
│                      │          │  pulse from          │
│                      │          │  the obtained Doppler│
│                      │          │  pulses              │
└─────────────────────┘          └─────────────────────┘
              \                    /
               \                  /
                ▼                ▼
           ┌──────────────────────┐
           │  generate a          │
           │  spectrum            │
           └──────────────────────┘
```

FIG. 8

```
┌───────────────────────────────────────────────────┐
│                                                     │
│                          920 ─┐  ┌───────────────┐  │
│                               └──│   Processor    │  │
│                                  └───────────────┘  │
│                                          │          │
│  ──────────────────────────────────────────────    │
│              │                                       │
│   ┌──────────────────┐  ─910                        │
│   │     Memory       │                               │
│   └──────────────────┘                               │
│                           Computer device 900       │
└───────────────────────────────────────────────────┘
```

FIG. 9

## INTERNATIONAL SEARCH REPORT

| International application No. |
| --- |
| **PCT/CN2023/096573** |

**A.  CLASSIFICATION OF SUBJECT MATTER**

H04B17/318(2015.01)i;  H04W64/00(2009.01)i

According to International Patent Classification (IPC) or to both national classification and IPC

**B.  FIELDS SEARCHED**

Minimum documentation searched (classification system followed by classification symbols)

IPC: H04B H04W H04L

Documentation searched other than minimum documentation to the extent that such documents are included in the fields searched

Electronic data base consulted during the international search (name of data base and, where practicable, search terms used)

CNTXT, ENTXTC, VEN, 3GPP, CNKI: 室内, 定位, WiFi, 感知, 感测, 场景, 视觉, 视线, 空间, 信道状态信息, CSI, 雷达, 频谱, 检测, 监测, 降噪, 噪声, 划分, 片段, 分段, 傅里叶, 傅立叶, indoor, position+, sens+, scenario+, scene?, vision, sight, space, radar?, spectrum, detect+, monitor+, noise, divid+, sections, fourier, FT

**C.  DOCUMENTS CONSIDERED TO BE RELEVANT**

| Category* | Citation of document, with indication, where appropriate, of the relevant passages | Relevant to claim No. |
| --- | --- | --- |
| X | CN 114782935 A (SHANDONG JIANZHU UNIVERSITY) 22 July 2022 (2022-07-22) description, paragraphs 6-15 | 1, 2, 8-10 |
| Y | CN 114782935 A (SHANDONG JIANZHU UNIVERSITY) 22 July 2022 (2022-07-22) description, paragraphs 6-15 | 3-5 |
| Y | CN 110730473 A (ARMY ENGINEERING UNIVERSITY OF PLA) 24 January 2020 (2020-01-24) claims 1-5, and description, paragraphs 28-80 | 3-5 |
| A | CN 111082879 A (NANJING UNIVERSITY OF POSTS AND TELECOMMUNICATIONS) 28 April 2020 (2020-04-28) entire document | 1-10 |
| A | EP 4030806 A1 (VESTEL ELEKTRONIK SANAYI VE TICARET A.S.) 20 July 2022 (2022-07-20) entire document | 1-10 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 September 2023** | **13 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/096573**

| Patent document cited in search report | | | Publication date (day/month/year) | Patent family member(s) | | | Publication date (day/month/year) |
|---|---|---|---|---|---|---|---|
| CN | 114782935 | A | 22 July 2022 | None | | | |
| CN | 110730473 | A | 24 January 2020 | CN | 110730473 | B | 28 April 2023 |
| CN | 111082879 | A | 28 April 2020 | CN | 111082879 | B | 01 February 2022 |
| EP | 4030806 | A1 | 20 July 2022 | KR | 20230113638 | A | 31 July 2023 |
| | | | | WO | 2022156996 | A1 | 28 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210875975